# EUROPÄISCHE PATENTSCHRIFT

(11) **EP 1 231 164 B1**
(45) Veröffentlichungstag und Bekanntmachung des Hinweises auf die Patenterteilung: **14.09.2005**
(21) Anmeldenummer: 02100071.6
(22) Anmeldetag: 29.01.2002
(51) Int. Cl.: B65G 1/04

(54) **Regallager**
Shelf storage
Magasin à rayonnage

(30) Priorität: 08.02.2001 DE 10105706
(43) Veröffentlichungstag der Anmeldung: 14.08.2002
(73) Patentinhaber: SIEMENS AKTIENGESELLSCHAFT, 80333 München (DE)
(72) Erfinder: Engelhardt, Alfred, 91241, Kirchensittenbach (DE); Gronimus, Kerstin, 91058, Erlangen (DE)

(56) Entgegenhaltungen:
- EP-A- 0 493 327
- EP-A- 0 909 725
- WO-A-01/10751
- WO-A-97/15513
- WO-A-99/10258
- CH-A- 678 310
- DE-A- 1 811 635
- DE-A- 4 009 635
- DE-A- 4 020 784
- DE-A- 19 517 745
- US-A- 5 927 926
- KUNZ M.; KOLLER H.: 'Vier Regelbedienger te operieren ?bereinander in einem Gang', M{rz 1993, VDI-VERLAG, DUSSELDORF
- KOLLER H.; BECK R.: 'Das virtuelle Lager - eine neue Systemphilosophie' FöRDERN UND HEBEN Bd. 44, Nr. 9, 1994, Seiten 704 - 707
- DAUM M.; EGGESTEIN F.: 'Lagerfahrzeuge als bereichs begreifende Systemkomponenten' FöRDERN UND HEBEN Bd. 36, Nr. 5, 1986, Seiten 340 - 343
- DUBACHER J.: 'Grosse Chance für Kleine' BILANZ Bd. AUGUST, 1999, Seiten 64 - 67
- 'Wettlauf gegen den Ruin' CASH 25 Juli 1997, Seite 26

## Beschreibung

Die Erfindung betrifft ein Regallager mit zumindest einer Lagergasse und je einem beiderseits einer jeden Lagergasse angeordneten Regalgerüst mit nebeneinander und in mehreren Lagerebenen übereinander angeordneten Fächern, wobei in jeder Lagergasse in Höhe einer jeden Lagerebene eine Horizontalführung mit einem horizontal verfahrbaren Gassenfahrzeug angeordnet ist und wobei jeder Lagergasse mindestens ein seitlich von ihr im Bereich eines Regalgerüstes angeordneter Vertikalförderer zugeordnet ist, der jeweils mindestens einen Teil der Lagerebenen miteinander verbindet.

Aus der WO 99/10258 ist ein dynamisches Kompaktlager bekannt, das dem eingangs genannten Grundaufbau entspricht. Dort sind die verschiedenen Lagerebenen über Vertikalfördereinrichtungen verbunden, während in den Lagerebenen horizontal ausgerichtete Transportgassen für Horizontalfördereinrichtungen vorgesehen sind. Seitlich der Transportgassen weisen die Lagerebenen Lagerkanäle auf, in denen Ladeeinheiten bewegbar angeordnet sind. Das dort beschriebene Kompaktlager weist unterschiedliche Funktionsbereiche mit Lade- bzw. Funktionseinheiten größerer Abmessung und Funktionsbereiche für Lade- bzw. Funktionseinheiten kleinerer Abmessungen auf. Dabei sind die Lagerkanäle vom Gesamtaufbau und in ihrer Tiefe so ausgelegt, daß in ihnen jeweils Palettenzüge mit mehreren aneinander gekoppelten Rollpaletten gelagert werden können. Diese Tiefe der Lagerkanäle bleibt auch dann erhalten, wenn Funktionsbereiche mit kleineren Abmessungen der Lagerkanäle in Länge und Breite gebildet werden. Dementsprechend muß auch das Transportfahrzeug in der Transportgasse mit Hebe- und Querfördereinrichtungen versehen sein, um die Paletten in einem derartigen Zug zu handhaben, zu vereinzeln und auf das Transportfahrzeug zu bringen. Eine solche Technik ist deshalb unwirtschaftlich, wenn es darum geht, eine große Anzahl unterschiedlicher kleiner Artikel zu lagern und zu kommissionieren. Ein ähnliches Lager mit ähnlichen Problemen ist aus der US 5 927 926 A bekannt.

Aus der DE 40 20 784 A1 ist ferner eine Regalanlage mit in Fächern eines Regals angeordneten Lagerbehältern bekannt, bei der die Lagerbehälter mittels einer Ziehvorrichtung aus den Fächern gezogen bzw. in diese hineingeschoben werden können. Allerdings ist diese Ziehvorrichtung Teil eines herkömmmlichen teuren Regalbediengerätes. Für die Handhabung von großen Artikelmengen in hochdynamischen Kommissionierprozessen sind diese Regalbediengeräte nicht geeignet, da eine entsprechend große Anzahl von Regalbediengeräten einerseits zu teuer wäre, andererseits diese sich in den Lagergassen auch gegenseitig behindern würden, d.h. die dynamischen Anforderungen können damit nicht wirtschaftlich umgesetzt werden.

Ziel der Erfindung ist es, ein einfaches, hochdynamisches Kommissionierlager mit dem eingangs genannten Aufbau zu schaffen, welches die Handhabung einer großen Anzahl von Artikeln mit sehr hoher Dynamik ermöglicht und gleichzeitig keine teuren Einrichtungen wie Regalbediengeräte, Transportfahrzeuge mit Hakeltechnik oder mit Satellitenfahrzeugen, benötigt.

Bei dem eingangs genannten Regallager ist jedes Fach zur Aufnahme eines einzigen, an seine Abmessungen angepaßten Behälters oder Tablares ausgelegt und die Gassenfahrzeuge sind jeweils mit einer Ziehvorrichtung ausgestattet, welche mittels Greifelementen mit den entsprechend angepaßten Behältern/Tablaren in Eingriff bringbar ist, um jeweils einen Behälter/Tablar aus dem Fach auf das Gassenfahrzeug zu ziehen und umgekehrt von dem Gassenfahrzeug in ein Fach zu schieben.

Das Regallager benutzt also einen an sich bekannten modularen Aufbau, allerdings nicht mit tiefen Lagerkanälen, bei denen mehrere Lagereinheiten über zusätzliche Koppeltechnik gehandhabt werden müßten, sondern mit Fächern geringer Tiefe, die jeweils nur einen Behälter bzw. nur ein Tablar aufnehmen. Dementsprechend werden diese Behälter oder Tablare auch mit einfacher Ziehtechnik über preiswerte Gassenfahrzeuge innerhalb der Lagerebenen befördert, während für den Transport zwischen den Lagerebenen und den Arbeitsplätzen in an sich bekannter Weise Vertikalförderer zum Einsatz kommen. Die Behälter oder Tablare können in Abhängigkeit von der Art und Größe der Artikel jeweils mehrere Artikel gleicher oder unterschiedlicher Art aufnehmen, so daß das Regal bezüglich der Stellplätze und der Dynamik optimal genutzt wird.

Das Regallager ist modular aufgebaut. So können beispielsweise in einem vorgegebenen Raum entsprechend der Größe der Artikel bzw. der Behälter jeweils Fächer mit großen Abmessungen entsprechend einem Großraster, zum Beispiel Palettenraster, vorgesehen sein, oder das Großraster kann durch ein Kleinraster zur Bildung von Fächern mit entsprechend kleineren Abmessungen unterteilt sein. Dabei muß natürlich darauf geachtet werden, daß innerhalb einer Lagergasse jeweils in ein und derselben Lagerebene nur Fächer gleicher Höhe vorgesehen werden, damit die Zuordnung und Führung der Gassenfahrzeuge zu einer bestimmten Lagerebene möglich ist.

Erfindungsgemäß - siehe Anspruch 1 - sind jeweils unterhalb der Lagergassen Arbeitsplätze zur Einlagerung, Kommissionierung und/oder Auslagerung von Artikeln angeordnet, die über die jeweiligen Vertikalförderer mit den Lagerebenen verbunden sind. Es sind auch jeweils auf der von der Lagergasse abgewandten Seite eines Regalgerüstes Arbeitsplätze zur Ein- und Auslagerung bzw. zur Kommissionierung von Artikeln in Höhe bestimmter Lagerebenen vorgesehen sein. In den einzelnen Arbeitsebenen sind dann jeweils Horizontalfördereinrichtungen vorgesehen, die die Arbeitsplätze untereinander und/oder oder mit den Vertikalförderern verbinden. Bei den unmittelbar an der Rückseite des Lagergerüsts vorgesehenen Arbeitsplätzen werden zusätzlich Fördereinrichtungen und Hubeinrichtungen vorgesehen, um Behälter bzw. Tablare direkt aus den Fächern zu entnehmen und einem Arbeitsplatz in ergonomisch günstiger Lage zuzuführen.

Bevorzugte Ausführungen finden sich in den Unteransprüchen.

Die Erfindung wird nachfolgend an Ausführungsbeispielen anhand der Zeichnung näher erläutert. Es zeigen
Figur 1 eine schematische Darstellung eines erfindungsgemäßen Regallagers in Seitenansicht,
Figur 2 eine Draufsicht des Regallagers von Figur 1 (im Ausschnitt),
Figur 3 eine vergrößerte Ausschnittsansicht einer Lagergasse aus Figur 1,
Figur 4 eine Vorderansicht IV-IV aus Figur 3 auf die Regalfächer,
Figur 5 eine gegenüber Figur 1 abgewandelte Ausführungsform eines Regallagers,
Figur 6 das Regallager von Figur 5 in Draufsicht.

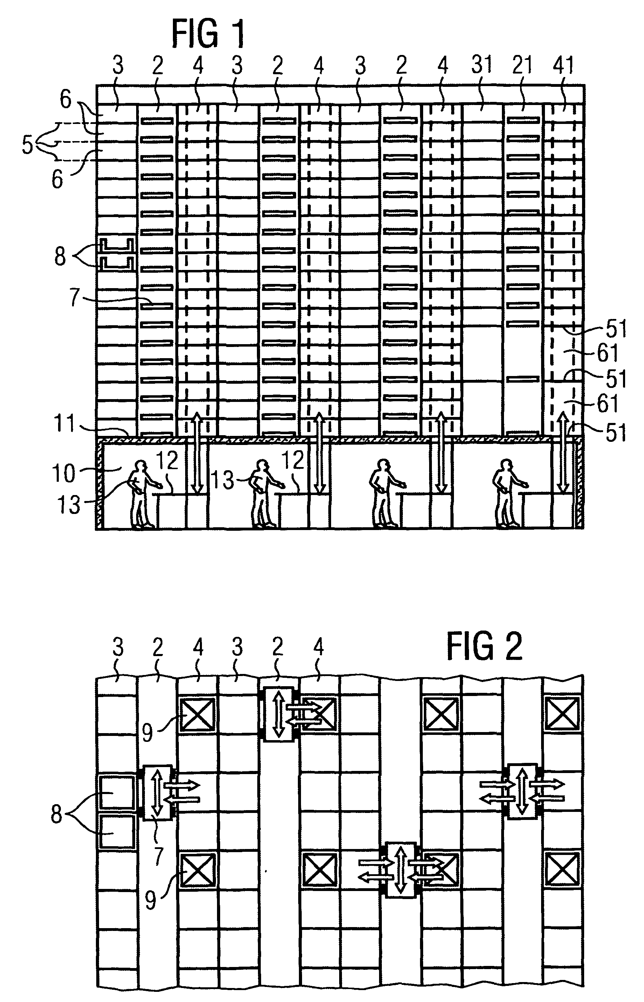

Das in den Figuren 1 und 2 gezeigte Regallager 1 besteht aus mehreren Lagergassen 2 zwischen jeweils zwei Regalgerüsten 3 und 4. Jedes Regalgerüst bildet eine Vielzahl von Lagerebenen 5, zwischen denen jeweils nebeneinanderliegende Fächer 6 ausgebildet sind. Die Abstände zwischen den Lagerebenen können auch unterschiedlich sein, wie dies beispielsweise in Figur 1 anhand der Lagergasse 21 und der Regalgerüste 31 und 41 gezeigt ist. Neben den kleinen Fächern 6 wie in den übrigen Regalgerüsten sind zwischen den Lagerebenen 51 große Fächer 61 ausgebildet, die eine mehrfache Höhe im Vergleich zu den Fächern 6 aufweisen. Es muß lediglich sichergestellt werden, daß in einer Lagerebene alle Fächer die gleiche Höhe aufweisen.

In jeder Lagerebene 5 bzw. 51 ist im Bereich der Lagergasse ein horizontal geführtes Gassenfahrzeug 7 angeordnet, das in der Lagerebene verfahrbar ist und jedes in dieser Lagerebene an die Lagergasse angrenzende Fach erreicht. Das Gassenfahrzeug ist mit einer Zieheinrichtung 73 versehen, mit dessen Hilfe Behälter oder Tablare 8 aus den Fächern 6 bzw. 61 auf das Gassenfahrzeug 7 gezogen oder von diesem Gassenfahrzeug 7 in ein Regalfach 6 bzw. 61 geschoben werden kann.

Die Verbindung zwischen den einzelnen Lagerebenen wird durch Vertikalförderer 9 hergestellt, die zwischen den Fächern eines Regalgerüstes, im dargestellten Beispiel jeweils in dem Regalgerüst 4, angeordnet sind. Die Anzahl der Vertikalförderer kann entsprechend den erforderlichen Fördermengen der dynamischen Anforderungen gewählt werden. Natürlich können ein oder mehrere Vertikalförderer auch ersatzweise oder zusätzlich in den Regalgerüsten 3 vorgesehen werden. Die Bewegung der Behälter oder Tablare zwischen den Gassenfahrzeugen und den Vertikalförderern erfolgt ebenfalls über die erwähnte Zieheinrichtung 71.

Die Vertikalförderer 9 stellen außerdem eine Verbindung zwischen den Lagerebenen und einem Arbeitsraum 10 her, der im Ausführungsbeispiel nach Figur 1 und 2 unterhalb der Lagergassen 2 bzw. der Regalgerüste 3 und 4 angeordnet und von diesen durch eine Zwischendecke 11 getrennt ist. In dem Arbeitsraum 10 sind Arbeitsplätze 12 zum Einlagern, Auslagern und Kommissionieren durch entsprechende Bedienpersonen 13 vorgesehen. Im Arbeitsraum 10 sind vorzugsweise nicht dargestellte Horizontalfördereinrichtungen vorgesehen, um Behälter zwischen den verschiedenen Arbeitsplätzen bzw. zwischen den Arbeitsplätzen und den Ausgängen der Vertikalförderer zu bewegen.

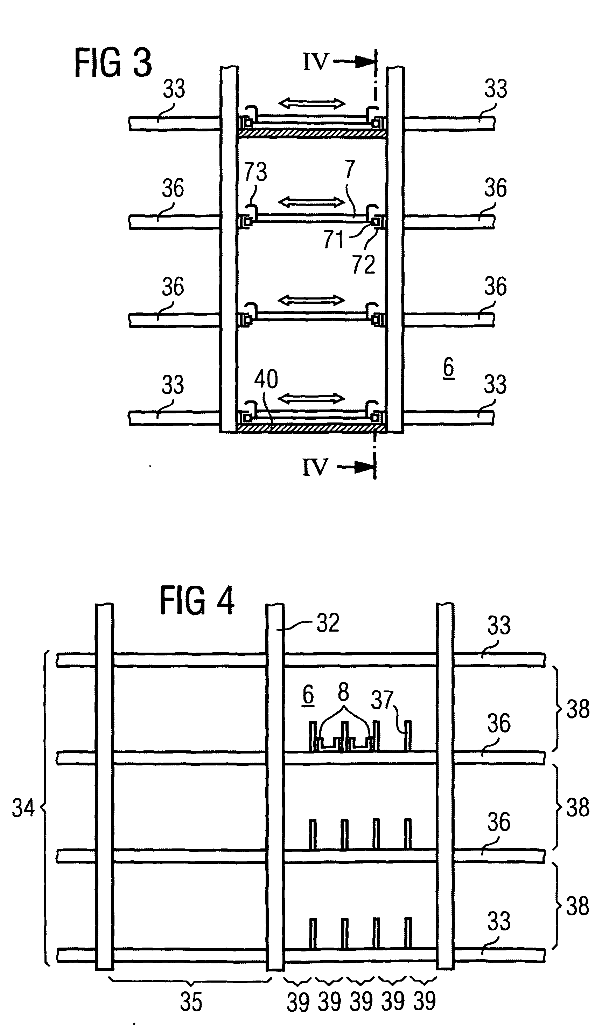

In den Ausschnittsdarstellungen der Figuren 3 und 4 ist der modulare Aufbau des Regalsystems ersichtlich. Die Regalgerüste bestehen aus einem System von Hauptstützen 32 sowie Hauptträgern 33, deren Abstände entsprechend einem Grundmodulraster eine Palettenrasterhöhe 34 und eine Palettenrasterbreite (1-3 Platzlagerung) 35 aufweisen, dem beispielsweise die Fächer 61 entsprechen. Innerhalb dieses Grundmodulrasters sind zur Bildung der Fächer 6 jeweils Zwischenträger 36 mit einer Rasterhöhe 38 und Zwischenstützen 37 mit einer Rasterbreite 39 angeordnet, die somit ein Tablarmodulraster mit den einzelnen Fächern 6 zur Aufnahme von Behältern oder Tablaren 8 bilden. In jeder durch Hauptträger 33 oder Zwischenträger 36 gebildeten Lagerebene ist eines der Gassenfahrzeuge 7 über seine Rollen 71 in Führungsschienen 72 verfahrbar. Zusätzlich können jeweils in Höhe der Hauptträger 33 im Bereich der Lagergasse begehbare Stege, beispielsweise Gitterroste 40 angeordnet sein, um die notwendige Zugänglichkeit zu gewährleisten.

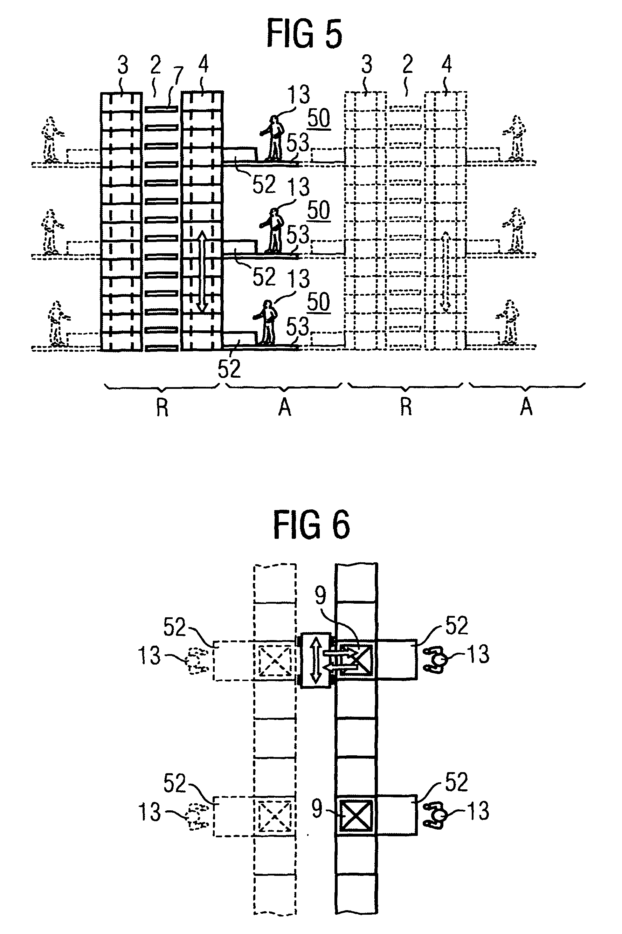

In Figur 5 und 6 ist ein etwas abgewandeltes Ausführungsbeispiel gezeigt. In diesem Fall, der hauptsächlich für ein eingassiges Regallager zur Anwendung kommt, sind wie im vorhergehenden Beispiel zu beiden Seiten der Lagergasse 2 zwei Regalgerüste 3 und 4 angeordnet. An den Rückseiten der Regalgerüste 3 und 4 ist jedoch nicht ein weiteres Regalgerüst wie in Figur 1 vorgesehen. Vielmehr sind hier Arbeitsplätze 52 nicht wie im vorherigen Beispiel unterhalb des Regallagers, sondern jeweils an der Rückseite eines Regalgerüstes in Arbeitsbereichen 50 auf verschiedenen Arbeitsebenen 53 vorgesehen. Wie in Figur 5 gezeigt, sind beispielsweise an der der Lagergasse 2 entgegengesetzten Seite des Regalgerüstes 4 mehrere Arbeitsebenen 53 mit entsprechenden Arbeitsplätzen 52 durch entsprechende Stahlbetondecken oder Stahlbühnen gebildet. Wahlweise können auch auf der gegenüberliegenden Seite hinter dem Regalgerüst 3 entsprechende, gestrichelt angedeutete Arbeitsplätze vorgesehen werden. Auch in diesem Fall sind wie im vorhergehenden Beispiel in den einzelnen Lagerebenen Gassenfahrzeuge 7 und Vertikalförderer 9 vorgesehen, wobei letztere die Verbindung zwischen verschiedenen Lagerebenen 5 und verschiedenen Arbeitsbereichen 50 herstellen.

Bedarfsweise sind derartige Vertikalförderer nicht nur in dem Regalgerüst 4, sondern auch im Regalgerüst 3 (gestrichelt angedeutet) einsetzbar.

Es ist aber auch möglich, die Behälter bzw. Tablare aus den verschiedenen Fächern eines Regalgerüstes 4 oder 3 mittels der Ziehvorrichtung des Gassenfahrzeuges zur Rückseite des Faches direkt in einen Arbeitsbereich 50 herauszuschieben oder mittels einer entsprechenden Vorrichtung in den Arbeitsbereich zu fördern. Da die einzelnen Fächer in unterschiedlicher Höhe zu den Arbeitsplätzen liegen, können zusätzliche Hubvorrichtungen vorgesehen sein, um die Behälter jeweils in eine ergonomisch günstige Arbeitshöhe zu bringen.

Wie in Figur 5 gestrichelt angedeutet, kann auch dieser Lageraufbau mit im Regalbereich angeordneten Lagerplätzen mehrfach nebeneinander angeordnet werden, so daß jeweils ein eingassiger Regalabschnitt R mit einem mehrere Arbeitsbereiche umfassenden Arbeitsabschnitt A abwechselt.

## Patentansprüche

1. Regallager mit zumindest einer Lagergasse (2;22) und je einem beiderseits einer jeden Lagergasse angeordneten Regalgerüst (3,4;31,41) mit nebeneinander und in mehreren Lagerebenen (5;51) übereinander angeordneten Fächern, wobei in jeder Lagergasse (2;21) in Höhe einer jeden Lagerebene eine Ho-rizontalführung (72) mit einem horizontal verfahrbaren Gassenfahrzeug (7) angeordnet ist und wobei jeder Lagergasse (2;21) mindestens ein seitlich von ihr im Bereich eines Regalgerüstes (3,4;31,41) angeordneter Vertikalförderer (9) zugeordnet ist, der jeweils mindestens einen Teil der Lagerebenen (5;51) miteinander verbindet,
wobei jedes Fach (6;61) zur Aufnahme eines einzigen, an seine Abmessungen angepaßten Behälters (8) ausgelegt ist und die Gassenfahrzeuge (7) jeweils mit einer Ziehvorrichtung ausgestattet sind, welche mittels Greifelementen mit den entsprechend angepaßten Behältern/Tablaren (8) in Eingriff bringbar ist, um jeweils einen Behälter aus dem Fach auf das Gassenfahrzeug (7) zu ziehen oder umgekehrt von dem Gassenfahrzeug in ein Fach (6) bzw. in einen Vertikalförderer (9) zu schieben,
**dadurch gekennzeichnet,**
**daß** jedes Regalgerüst (3,4;31,41) jeweils durch ein Stützgerüst aus Hauptstützen (32) und Hauptträgern (33) gebildet ist, die in einem Großraster angeordnet sind, und daß zwischen diesen jeweils Zwischenträger (36) und Zwischenstützen (37) in einem Feinraster zur Bildung der Fächer (6) angeordnet sind,
**daß** unterhalb der Lagergassen (2;21) jeweils Arbeitsplätze (12) zur Einlagerung, Kommissionierung und/oder Auslagerung von Artikeln angeordnet sind, die über die jeweiligen Vertikalförderer (9) mit den Lagerebenen (5;51) verbunden sind, und daß auf der von der Lagergasse (2) abgewandten Seite eines Regalgerüstes (3,4) in Höhe bestimmter Lagerebenen (54) jeweils Arbeitsplätze (53) zur Ein- und Auslagerung bzw. zur Kommissionierung von Waren angeordnet und in den einzelnen Arbeitsbereichen (52) jeweils Horizontalfördereinrichtungen (55) vorgesehen sind, die die Arbeitsplätze (53) untereinander und/oder mit Senkrechtförderern (9) verbinden, wobei an der der Lagergasse (2) abgewandten Seite des Regalgerüstes (4) in den jeweiligen Arbeitsbereichen (52) jeweils Fördereinrichtungen und Hubeinrichtungen vorgesehen sind, um Behälter bzw. Tablare aus den Fächern (6) zu entnehmen und einem Arbeitsplatz in ergonomisch günstiger Lage zuzuführen.

2. Regallager nach Anspruch 1,
**dadurch gekennzeichnet, daß** die einer Lagergasse (2;21) zugewandten Fächer (6;61) einer Lagerebene (5;51) alle gleiche Höhe aufweisen.

3. Regallager nach Anspruch 2,
**dadurch gekennzeichnet, daß** die unterschiedlichen Lagergassen (2;21) und/oder unterschiedlichen Lagerebenen (5;51) zugeordneten Fächer unterschiedliche Höhe und/oder Breite aufweisen können.

4. Regallager nach einem der Ansprüche 1 bis 3,
**dadurch gekennzeichnet, daß** in den Fächern (6) Tablare (8) zur Aufnahme einer Mehrzahl von gleichen und/oder unterschiedlichen Artikeln angeordnet sind.

## Claims

1. Rack store having at least one storage aisle (2; 22) and in each case a rack frame (3, 4; 31, 41) arranged on both sides of each storage aisle and having compartments arranged beside one another and above one another at a plurality of storage levels (5; 51), a horizontal guide (72) with an aisle vehicle (7) that can be moved horizontally being arranged in each storage aisle (2; 21) at the height of each storage level, and each storage aisle (2; 21) being assigned at least one vertical conveyor (9) which is arranged at its side in the region of a rack frame (3, 4; 31, 41) and in each case connects at least some of the storage levels (5; 51) to one another,
each compartment (6; 61) being designed to accommodate a single container (8) matched to its dimensions, and the aisle vehicles (7) being in each case equipped with a pulling apparatus which, by means of gripping elements, can engage in the correspondingly adapted containers/trays (8), in order in each case to pull a container out of the compartment onto the aisle vehicle (7) and, conversely, to push it from the aisle vehicle into a compartment (6) or into a vertical conveyor (9),
**characterized in that**
each rack frame (3, 4; 31, 41) is in each case formed by a supporting frame comprising main supports (32) and main beams (33), which are arranged in a coarse grid, and **in that** intermediate beams (36) and intermediate supports (37) are in each case arranged between these in a fine grid in order to form the compartments (6),
**in that** workstations (12) for putting articles into store, order picking and/or removing articles from store are in each case arranged underneath the storage aisles (2; 21) and are connected to the storage levels (5; 51) via the respective vertical conveyors (9),
and **in that**, in each case on the side of a rack frame (3, 4) facing away from the storage aisle (2), workstations (53) for putting goods into store, removing goods from store and for order picking are provided at the height of specific storage levels (54) and, in the various working areas (52), in each case horizontal conveying devices (55) are provided, which connect the workstations (53) to one another and/or to vertical conveyors (9), in each case conveying devices and lifting devices being provided in the respective working areas (52) on the side of the rack frame (4) facing away from the storage aisle (2), in order to remove containers or trays from the compartments (6) and to feed them to a workstation in an ergonomically beneficial position.

2. Rack store according to Claim 1, **characterized in that** the compartments (6; 61) facing a storage aisle (2; 21) of a storage level (5; 51) all have the same height.

3. Rack store according to Claim 2, **characterized in that** the compartments assigned to different storage aisles (2; 21) and/or different storage levels (5; 51) can have different heights and/or widths.

4. Rack store according to one of Claims 1 to 3, **characterized in that** trays (8) for accommodating a plurality of identical and/or different articles are arranged in the compartments (6).

## Revendications

1. Magasin à rayonnages, comportant au moins une allée (2 ; 21) de magasin et un bâti (3, 4 ; 31, 41) respectif de rayonnages disposé de part et d'autre de chaque allée de magasin et doté de casiers disposés en juxtaposition et en superposition dans plusieurs niveaux (5 ; 51) de stockage, un guide (72) horizontal, doté d'un chariot (7) de desserte pouvant être déplacé horizontalement, étant disposé dans chaque allée (2 ; 21) de magasin à hauteur de chaque niveau de stockage, au moins un convoyeur (9) vertical étant associé à chaque allée (2 ; 21) de magasin, convoyeur qui est disposé sur le côté de cette allée dans la région d'un bâti (3, 4 ; 31, 41) de rayonnages et qui relie respectivement entre eux au moins une partie des niveaux (5 ; 51) de stockage,
chaque casier (6 ; 61) étant conçu pour recevoir un unique récipient (8), adapté à ses dimensions, et les chariots (7) de desserte étant chacun équipés d'un dispositif de traction qui, au moyen d'éléments de préhension, peut être amené en engagement avec les récipients/bacs (8) adaptés en conséquence, afin de tirer chaque fois un récipient hors du casier sur le chariot (7) de desserte, ou à l'inverse de le pousser depuis le chariot de desserte dans un casier (6) ou dans un convoyeur (9) vertical,
**caractérisé en ce que** chaque bâti (3, 4; 31, 41) de rayonnages est respectivement formé par un bâti de soutien constitué de montants (32) principaux et d'éléments (33) porteurs principaux qui sont disposés suivant un quadrillage large, et **en ce que** des éléments (36) porteurs intermédiaires et des montants (37) intermédiaires sont respectivement disposés entre les précédents suivant un quadrillage serré, pour former les casiers (6),
**en ce que** des postes (12) de travail sont respectivement disposés en dessous des allées (2 ; 21) de magasin pour le stockage, la préparation pour des commandes et/ou le déstockage d'articles, postes qui sont reliés par l'intermédiaire des convoyeurs (9) verticaux respectifs aux niveaux (5 ; 51) de stockage,
et **en ce que** des postes (53) de travail respectifs sont disposés sur le côté d'un bâti (3, 4) de rayonnages qui est opposé à l'allée (2) de magasin, à hauteur de niveaux (54) de stockage donnés, pour le stockage et le déstockage ou encore la préparation de marchandises pour des commandes, et des convoyeurs (55) horizontaux sont respectivement prévus dans les zones (52) de travail individuelles, convoyeurs qui relient les postes (53) de travail entre eux et/ou à des convoyeurs (9) verticaux, sachant que des convoyeurs et des dispositifs de levage sont respectivement prévus dans les zones (52) de travail respectives sur le côté du bâti (4) de rayonnages qui est opposé à l'allée (2) de magasin, afin de prélever des récipients ou bacs des casiers (6) et de les apporter à un poste de travail dans une position ergonomiquement favorable.

2. Magasin à rayonnages suivant la revendication 1, **caractérisé en ce que** les casiers (6 ; 61) d'un niveau (5 ; 51) de stockage qui sont tournés vers une allée (2 ; 21) de magasin ont tous la même hauteur.

3. Magasin à rayonnages suivant la revendication 2, **caractérisé en ce que** les casiers affectés à différentes allées (2 ; 21) de magasin et/ou à différents niveaux (5 ; 51) de stockage peuvent posséder des hauteurs et/ou des largeurs différentes.

4. Magasin à rayonnages suivant l'une des revendications 1 à 3, **caractérisé en ce que** des bacs (8) sont disposés dans les casiers (6) pour recevoir une pluralité d'articles identiques et/ou différents.
